# EUROPEAN PATENT SPECIFICATION

(11) **EP 2 534 040 B1**
(45) Date of publication and mention of the grant of the patent: **16.05.2018**
(21) Application number: 11702475.2
(22) Date of filing: 10.02.2011
(51) Int. Cl.: B63B 27/30

(54) **BOW LOADING STATION WITH DOUBLE DECK FOR CRYOGENIC FLUID**
BUGBELADUNGSSTATION MIT DOPPELDECK FÜR KRYOFLÜSSIGKEIT
STATION DE CHARGEMENT AVANT À DOUBLE PONT POUR LIQUIDE CRYOGÉNIQUE

(30) Priority: 10.02.2010 EP 10153175
(43) Date of publication of application: 19.12.2012
(73) Proprietor: Single Buoy Moorings, Inc., 1723 Marly (CH)
(72) Inventor: FOURNIER, Jean-Robert, F-06300 Nice (FR); HOEDEMAKER, Priscilla, F-06140 Vence (FR); LE TOUZÉ, Laurent, F-06300 Nice (FR)
(74) Representative: Nederlandsch Octrooibureau
(86) International application number: PCT/EP2011/051976
(87) International publication number: WO 2011/098527

(56) References cited:
- WO-A1-00/02773
- WO-A2-2009/071563
- US-A- 3 540 400
- US-A1- 2002 134 455
- US-A1- 2008 148 740

## Description

### Field of the invention

The invention relates to an offshore cryogenic offloading system that lies in a sea having a sea surface and a sea floor, wherein cryogenic fluid is transferred between two floating units in a bow to stem configuration comprising a floating structure that lies at the sea surface and comprises processing units, a floating tanker that lies at the sea surface and transports the cryogenic fluids from one location to another, at least one cryogenic transfer hose that extends from the stem of said floating structure to the bow of said floating tanker to carry cryogenic fluids from one to the other, at least one vapor return line that extends from the stem of the floating structure to the bow of the floating tanker to carry the boil-off vapor from the floating tanker to the floating structure in normal operations.

The invention also relates to a method of transferring LNG in a bow to stem configuration between two floating units.

### Background of the invention

Liquefied Natural Gas (LNG) may be produced at seabed-supported platforms or spread moored or turret moored LNG liquefaction barges (FLNG) and is transferred from the production/processing site to cryogenic carriers. The LNG carriers may be vessels that are moored to an offshore liquefaction barge in a tandem configuration, via hawsers connecting the bow of the LNG carrier to the stem of the liquefaction barge and that are kept in position by dynamic positioning and the use of their thrusters. A flexible cryogenic hose connects at one end to a manifold at the bow of the carrier and at another end to a crane boom on the barge. Tandem offloading solutions are preferred as inherently safer compared to side by side approaches from an operational perspective in severe offshore conditions.

In US patent no. 6,434,948 a LNG transfer system is described in which a flexible LNG pipe is arranged at the end of a crane or boom which crane is rotatable around a horizontal axis. A connector in the LNG tank vessel's bow is connected to a pipe manifold leading further to the LNG tanks on the vessel and a mooring device arranges for short separation moorage between Floating Production, Storage and Offloading (FPSO) vessel's stem and LNG tank vessel's bow. In these existing solutions which utilize tandem mooring for cargo transfer, the proposed solutions always propose to use tandem mooring equipment between the two vessels and to have an important separation distance between the FPSO and export tanker. In most cases the options are to suspend the cargo transfer hose from an extended crane structure (limited movement envelop) or to use a longer (approximately 290 m) in-water hose.
WO 00/02773 discloses a bow loading arrangement for shuttle tanker where the mooring winch drum and hose handling winch drum are operated both together and independently of each other by the same drive unit. The winch may be placed on the main deck, and by using guide pulleys both the hose handling rope and the mooring hawser can be guided to the respective drums.
It is an object to obtain or improve a clearance between the hose transfer lines and the mooring equipment means used to moor the two vessels in a tandem configuration.

It is an object of the present invention to propose a tandem offloading configuration for LNG offshore transfer that does not require the use of an installation vessel, a configuration that only requires relatively small storage equipment, shorter and hence less expensive cryogenic transfer lines.

### Summary of the Invention

The object of the present invention is achieved by providing an offshore cryogenic offloading system as defined by claim 1
It is another object of the invention to provide the offshore offloading system of the invention with a third level comprising a tandem mooring offloading deck placed on top of the fluid connection deck to enable the two floating units to be releasably moored one to the other. Therefore a major advantage according to the present invention is to optimize the clearance between the transfer lines and the mooring equipment means used to moor the two vessels in a tandem configuration.
It is a further object of the invention to provide offshore offloading system with at least the floating tanker provided with dynamic positioning that can be combined with a mooring device arranged for short separation moorage between the floating structure's stem and the floating tanker's bow. The floating structure can in addition be provided with a heading control system.

An additional object of the present invention is to provide at the stem of the floating structure, one storage reel per transfer line, with at least one of the storage reels having a cross section showing flat sections to accommodate the cryogenic hose end fitting. A further object of the present invention is to provide a method of transferring a cryogenic media such as LNG in an offshore bow to stem configuration between two floating units, this method also offering the possibility to install each transfer line independently one from the other.

To carry out tandem offloading operation from a floating structure such as a LNG FPSO there can be three alternatives based on the cryogenic hose technology and suitable for floating tanker such as LNG carrier ship (LNGC) equipped with bow manifolds: aerial catenary, floating hose or marine catenary. As a preferred embodiment the following description is limited to the floating hoses alternative.

In this description when using the term "processing units" it must be understood any kind of units onboard a vessel such as a liquefaction unit, a regasification unit, etc... Further when using the term "cryogenic fluid" it must be understood any kind of very cold fluids such as liquefied CO₂, Liquefied Petroleum Gas (LPG) and any kind of cryogenic fluids such as LNG. To end, the wording 'fluid' must be understood as fluid in a liquid phase or fluid in a gas phase.

### Brief description of the drawings:

The invention will be further described below in connection with exemplary embodiments with reference to the accompanying drawings, wherein
FIG. 1 shows a top view of an FPSO vessel and an LNG tanker interconnected by 3 flexible LNG pipes extended between the vessel and the tanker, with the LNG tanker's bow moored to the FPSO vessel's stem according to one embodiment of the present invention;
FIG.2A shows a side view of the embodiment of Fig.1;
FIG.2B shows an asymmetric tandem offloading arrangement according to another embodiment of the present invention;
FIG. 3 shows an isometric view of the piping at the bow of the floating tanker when the transfer lines are connected, according to the present invention;
FIG. 4A shows a front view of the bow of the floating tanker according to the present invention, with a bow loading station comprising additional levels;
FIG. 4B shows a rear isometric view of the bow of the floating tanker with the third level comprising a tandem mooring offloading deck placed on top of the fluid connection deck.
FIG. 5A and 5B show different views of a storage reel having a cross section showing flat sections according to one possible embodiment of the present invention;
FIG. 6A shows a possible embodiment for the draining of the fluid transfer line before disconnection where the vapor return is by-passed for the hot gas to be directed into the fluid transfer lines and push the remaining fluid out;
FIG. 6B shows an alternative to the method shown in FIG. 6A where the hot gas is blown directly through one of the fluid transfer lines in order to push the remaining fluid out through the other fluid transfer line.

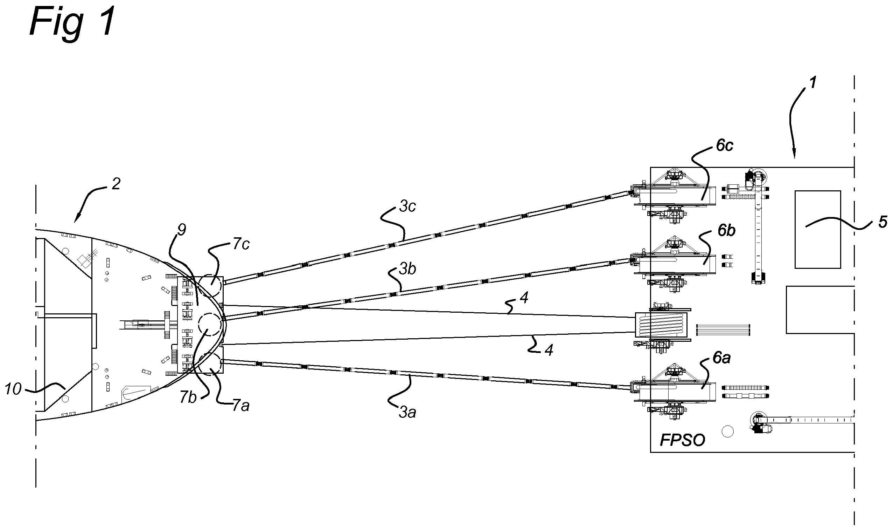

FIG. 1 shows a top view of an FPSO vessel 1 and an LNG tanker 2 interconnected by three flexible LNG pipes or fluid transfer lines 3a, 3b and 3c extending between the vessel 1 and the tanker 2. One of the three fluid transfer lines is referred as a vapor return line and the others as fluid product transfer lines. According to one embodiment of the present invention, the FPSO vessel 1 and the LNG tanker 2 are in a bow to stem tandem configuration with the LNG tanker's bow moored with two mooring hawsers 4, in a twin arrangement between vessels centerlines, to the FPSO vessel's stem. In FIG. 1 the floating unit 1 is an FPSO vessel comprising a liquefaction plant 5. However, it should be noted that according to the invention the floating unit 1 could have been of another type such as a Floating Storage and Regasification Unit (FSRU) comprising as a processing unit a regasification unit.
In the area located at the very stem position of the FPSO are some mooring equipment 8 and three storage reels 6a, 6b and 6c, one for each flexible LNG pipe. It appears clearly on this top view that reels are located to free the centerline space and clear the mooring hawser hooks locations, minimize the required hose length and maximize the clearance between the flow lines.
At their other extremities, the LNG pipes 3a, 3b and 3c are each connected to a LNG pipe connector 7a, 7b and 7c (shown in dashed point in FIG.1). The bow of the LNG tanker 2 is provided with a bow loading station 9 comprising at least a fluid connection deck placed on the top of the bow upper deck where the LNG pipe connector 7a, 7b and 7c are located. All the tanker mooring equipment such as winches and quick release hooks are located on the bow loading station 9 at the tandem mooring offloading deck placed on top of the fluid connection deck. The floating tanker 2 comprising LNG storage tanks 10 is specifically configured to carry LNG over an ocean or other large water body and there is at least one mooring line extending from the seabed to moor the floating structure.

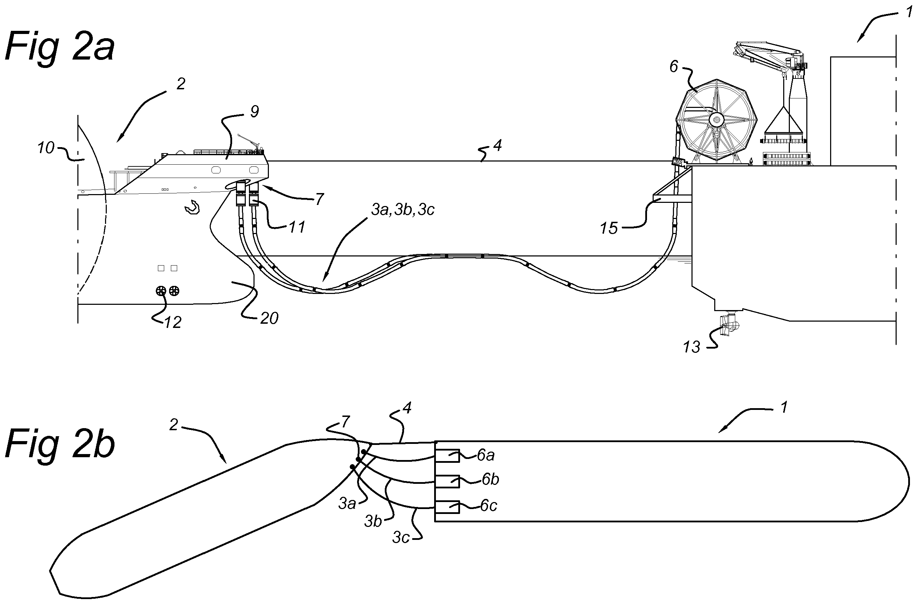

FIG.2A shows a side view of the embodiment of FIG.1. In this particular embodiment, the two vessels are also moored one to the other, in a bow to stem offloading configuration, via hawsers 4. In FIG.2A, the LNG transfer lines are floating cryogenic pipes 3a, 3b and 3c.The transfer lines are provided with buoyancy modules 11, only the ones located near the LNG connectors 7 are shown in FIG.2A but there could be buoyancy modules placed along the whole length of the transfer pipes 3. It is also clearly shown that the transfer lines 3 pass through guiding platforms 15 which are located at the stem of the LNG FPSO 1 below the storage reels 6. FIG.2A shows also that the bow loading station 9 enables the LNG pipes connectors 7 to be placed further behind the vertical projection of the bulb 20 of the tanker 2. Therefore, the minimal distance between the transfer lines 3 and the bulb 20 of the tanker 2 is at least four meters.

In a further embodiment, the bulb 20 of the tanker 2 is arranged in the bow portion of the tanker 2 to be relocatable in order to ensure enough clearance between the fluid transfer lines 3 and the hull of the floating tanker 2. The bulb 20 of the tanker 2 is arranged to be turned away from the bow portion of the tanker 2 during the loading/offloading through the fluid transfer lines 3. The bulb 20 of the tanker 2 is arranged to be located in the bow portion of the tanker 20 during sailing.

The distance between the two vessels, according to one preferred embodiment of the present invention, is approximately ninety five meters. In FIG.2A it also appears that the tanker 2 is provided with bow thrusters 12 and the LNG FPSO 1 with azimuthal thrusters 13. Thrusters enable the vessels to be provided with dynamic positioning (DP), a computer controlled system to automatically maintain the vessels' position and heading. The heading control capacity on the LNG FPSO 1 allows rotating the vessel toward the swell and limits the resulting dynamic response of the lines 3. The DP capacity on the tanker 2 allows controlling both the static offset (radial and angular) and limits as well the resulting lines dynamic by controlling the tanker heading. FIG.2B shows an asymmetric tandem offloading arrangement according to another embodiment of the present invention. In this configuration, the three connecting points 7 are at one side of the tanker 2, hence keeping the lines 3 safe from the bulb 20 of the tanker 2. This arrangement also gives the possibility to position the connectors 7 closer to the hull. In this case the bow loading station required is less massive and hence less expensive. The bow loading station is also placed more aft wards which guarantees more easily a good visibility. As shown in FIG.2B in such asymmetric tandem offloading arrangement, the tanker 2 is better positioned for Emergency disconnection and emergency sail away. Further in that position the tanker 2 benefits of an ideal dynamic response of the lines 3 due to the protecting effect on swell of the LNG FPSO 1.

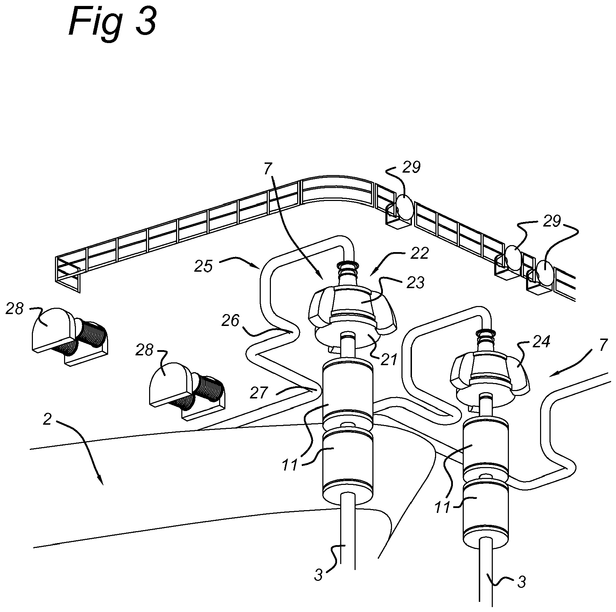

FIG. 3 shows an isometric view of the piping at the bow of the floating tanker 2 when the transfer lines 3 are connected. This figure clearly shows that the fluid transfer lines 3 are connected via a fluid connector 21 that is provided with an emergency release system and quick coupling decoupling system 22. This fluid connector is also combined with a structural connector 23 providing load diverting means and mechanical clamps 24 to ensure the connection of the line with the fluid connector 22. The figure also shows, that according to this embodiment, above connection, the piping comprises an expansion loop 25 followed by two swivels 26 and 27 and finally directed toward the LNG storage tanks (not shown). In this figure, some of the mooring equipment such as the mooring winches 28 and the hawsers fairleads 29 appear above the piping.

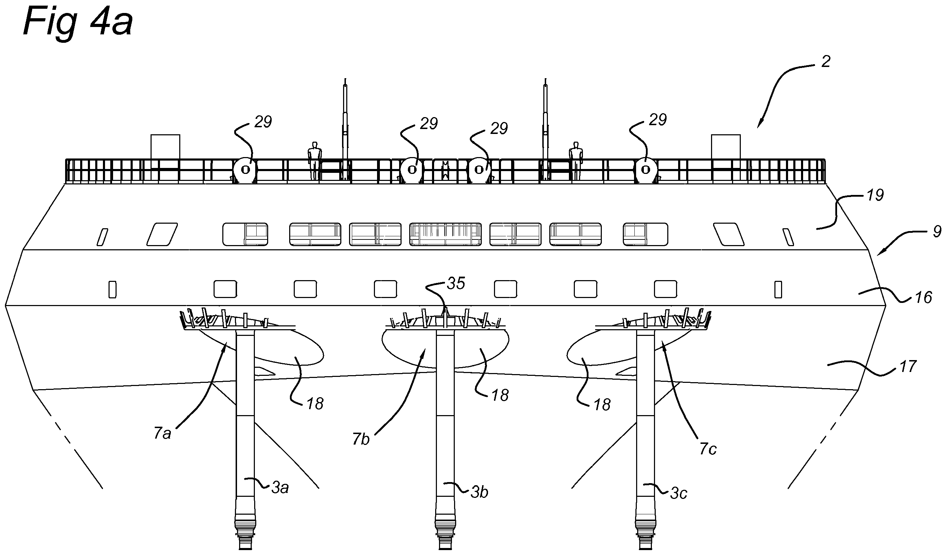

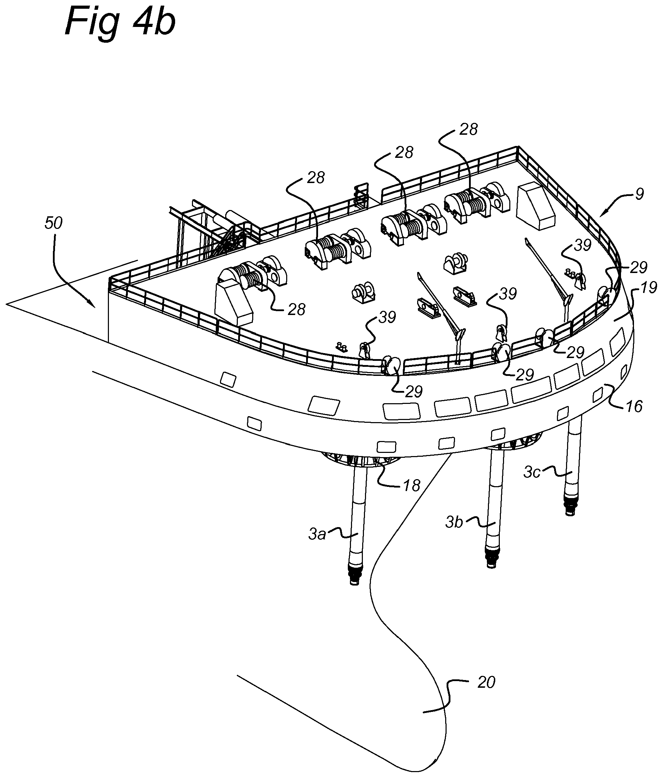

FIG. 4A shows a front view of the bow of the floating tanker 2 according to the present invention, with a bow loading station 9 comprising a fluid connection deck 16 placed on the top of the bow upper deck 17 and FIG. 4B shows a rear isometric view of the bow of the floating tanker 2 with the third level comprising a tandem mooring offloading deck 19 placed on top of the fluid connection deck 16. As already mentioned in FIG. 3, the mooring equipment of the floating tanker 2 is located above the piping and hence above the fluid connection deck 16. In these figures it appears clearly that the bow loading station 9 is provided with two decks 16 and 19, one placed above the other, and both placed on the top of the bow upper deck 17. Each deck of the bow loading station 9 is dedicated for a distinct and particular function. The fluid connection deck 16 is dedicated to the connection of the tanker 2 with the fluid transfer lines 3. In FIG. 4A, the receiving places 18 for fluid connectors are clearly shown. In FIG. 4B, the tandem mooring offloading deck 19 is clearly shown with the mooring winches 28 and the hawsers fairleads 29. This configuration has the advantage of optimizing the clearance between the transfer lines 3 and the hawsers 4 or other mooring equipment means used to moor the two vessels in a tandem configuration.

According to one embodiment of the present invention, the floating tanker 2 is provided with a cofferdam 50 supporting the bow loading station 9 and offering an optimal layout where all mooring and handling elements are on the same deck 19 at a different higher level than the connecting elements which are at the fluid connection deck 16.

According to one embodiment of the present invention, the mooring winches 28 can also be used as handling winches. In fact for the mooring of the two vessels one to the other, a hawser pick-up line or messenger line 4' is handled to the floating tanker 2. Once the messenger line 4' is onboard the tanker 2, it will pass through the fairleads 29, wraps around the sheave 39 and extends to be attached to the mooring winch 28 on the bow loading station 9. Once the two vessels are moored one to the other, the connection of the transfer lines 3 can start. A similar method as the one for the hawser connection is applied. A messenger line is sent onboard the floating tanker 2, passes via the receiving spaces 18 for fluid connectors, then through a fairleads, wraps around the sheave 39 and extends to be attached to the mooring winch line. The mooring winch 28 is then used to handle the connection of the transfer line 3 by winching away from the LNG FPSO the messenger line which is engaging a cable to which the connector of the fluid transfer line is attached. This method enables to install each transfer line 3 independently one from the other.
At the bottom of deck 16, in proximity of the receiving spaces 18 for fluid connectors, there are weathertight closing means 35 in order to protect the piping and the elements comprised between the fluid connection deck 16 and the tandem mooring offloading deck 19 when the tanker is not connected to another vessel.

According to this particular embodiment, the bow loading station 9 has a hammer head shape; however it can have any other type of shape such as a square, a rectangle, as long as the visibility required to manoeuver and to handle the vessel is guaranteed.

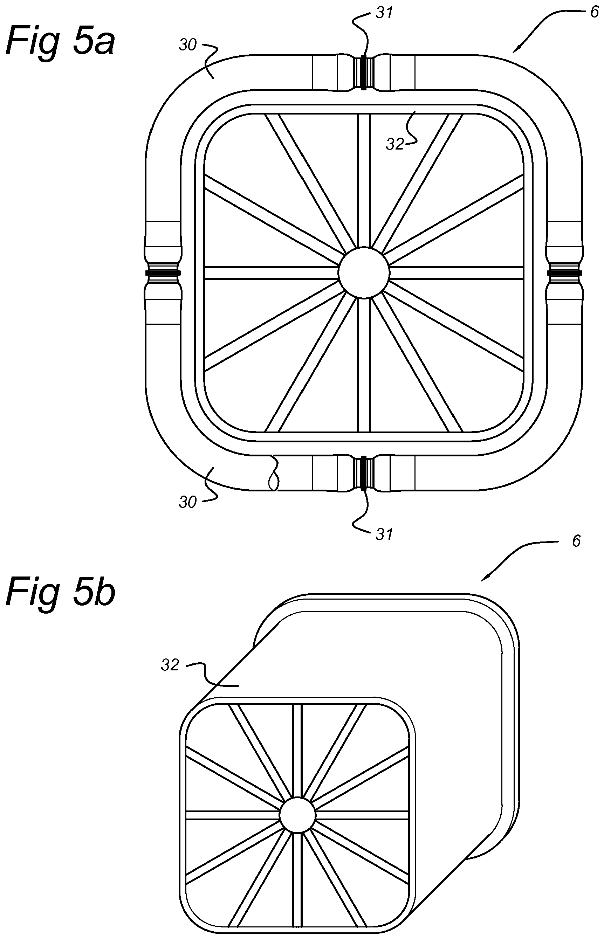

FIG. 5A and 5B show different views of a storage reel 6 having a cross section showing flat sections according to one possible embodiment of the present invention. As clearly shown In FIG. 5A the flat sections enable to accommodate the cryogenic hose end fitting. In fact, by using this shape of reel only the mid hose sections 30 are bent, the rigid end terminations 31 being stored on a flat surface 32.

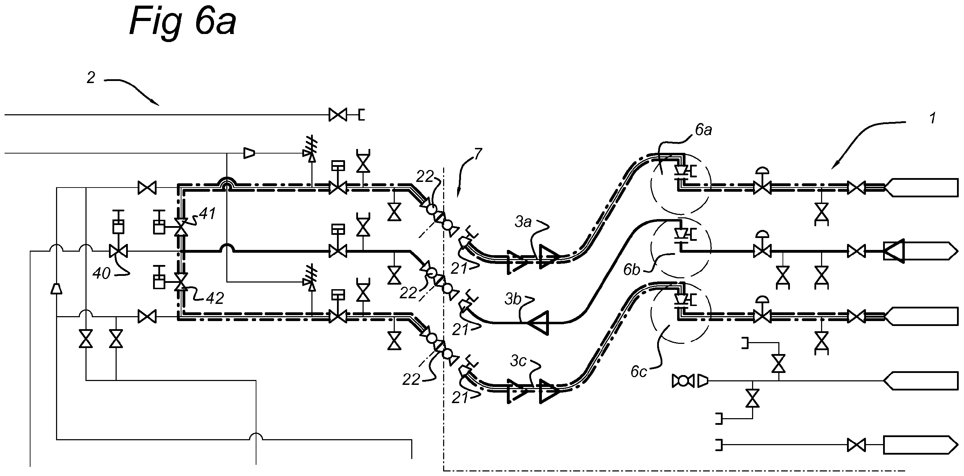

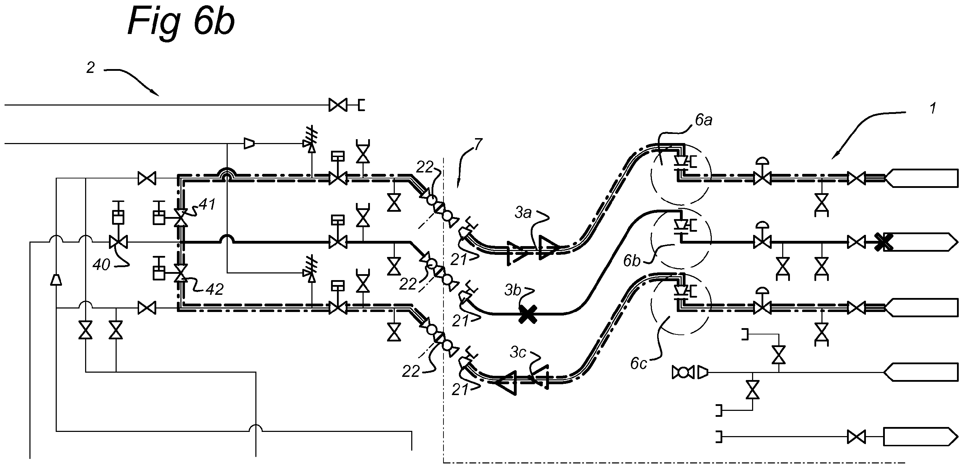

FIG. 6A shows a possible embodiment for the draining of the fluid transfer line before disconnection where the vapor return is by-passed, for the hot gas to be directed into the fluid transfer lines and push the remaining fluid out. FIG. 6B shows an alternative to the method shown in FIG. 6A where the hot gas is blown directly through one of the fluid transfer lines in order to push the remaining fluid out through the other fluid transfer line.
During any kind of LNG transfer operations (including ship to shore, side-by-side and tandem configuration) a vapor return line is required to handle the boil-off gas. For tandem offloading a bypass between the fluid product lines and the vapor return line can be used to improve the duration of the cargo transfer operations such as the cooldown, purging and inerting operations. During draining operation, as shown in FIG.6A, closing valves 40, 41 and 42 will create a bypass between the fluid product lines and the vapor return line. In this configuration the hot gas is directed into the fluid transfer lines and will hence push the remaining fluid out of the lines. It can be done for all lines at the same time or, only for a group of lines (when there are more than two fluid product lines) or for one fluid product line at a time.

Another option, as shown in FIG.6B, is to blow directly hot gas through one of the liquid lines in order to push it out through the other liquid line. In that case the return vapor line is not required, hence valve 40 can stay open, and valves 41 and 42 must be closed.

Although particular embodiments of the invention have been described and illustrated herein, it is recognized that modifications and variations may readily occur to those skilled in the art, and consequently, it is intended that the claims be interpreted to cover such modifications and equivalents.

## Claims

1. An offshore cryogenic offloading system that lies in a sea having a sea surface and a sea floor, wherein cryogenic fluid is transferred between two floating units in a bow to stem configuration, said system comprising:
- a floating structure (1) that lies at the sea surface and comprises processing units
- a floating tanker (2) that lies at the sea surface and transports the cryogenic fluids from one location to another said tanker having a bow loading station;
- at least one cryogenic transfer line (3b, 3c) that extends from the stem of said floating structure (1) to the bow of said floating tanker (2) to carry cryogenic fluids from one to the other;
- at least one transfer line acting as vapor return line (3a) that extends from the stem of said floating structure (1) to the bow of said floating tanker (2) to carry the boil-off vapor from the floating tanker (2) to the floating structure (1) in normal operations; wherein the bow of the floating tanker (2) is provided with an additional level comprising a fluid connection deck (16) placed on the top of a bow upper deck (17),
**characterised in that**
the bow of the floating tanker (2) is provided with a third level comprising a tandem mooring offloading deck (19) placed on top of the fluid connection deck (16) to enable the two floating units (1, 2) to be releasably moored one to the other, wherein all mooring and handling elements are located on the bow loading station at the tandem mooring offloading deck (19) at a different level than fluid connecting elements which are at the fluid connection deck (16).

2. An offshore cryogenic offloading system according to claim 1 wherein at least the floating tanker (2) is provided with dynamic positioning.

3. An offshore cryogenic offloading system according to any one preceding claim, wherein the tanker (2) is provided with a relocatable bulb (20).

4. An offshore cryogenic offloading system according to claim 1 or 2 wherein the floating structure (1) is provided with a heading control system.

5. An offshore cryogenic offloading system according to any one preceding claim wherein at least one mooring line extends from the seabed to moor the floating structure

6. An offshore cryogenic offloading system according to any one preceding claim wherein there is a cryogenic hose fluid connector (21) per cryogenic transfer line (3a, 3b, 3c) installed on the bow loading station (9).

7. An offshore cryogenic offloading system according to claim 6, wherein each cryogenic hose fluid connector (21) is provided with emergency disconnection means.

8. An offshore cryogenic offloading system according to claim 6 or 7, wherein each cryogenic hose fluid connector (21) is combined with a structural connector (23) providing load diverting means.

9. An offshore cryogenic offloading system according to claim 1, wherein there is one pull-in winch (28) per transfer line (3a, 3b, 3c) installed on the bow loading station (9).

10. An offshore cryogenic offloading system according to claim 9 wherein the pull-in winches (28) are also used as handling winches.

11. An offshore cryogenic offloading system according to any preceding claims wherein the floating structure (1) is provided with a storage reel (6) per transfer line (3) located at the stem of the floating structure (1).

12. An offshore cryogenic offloading system according to claim 11, wherein the floating structure (1) is provided with at least one of the storage reels (6) having a cross section showing flat sections (32) to accommodate the cryogenic hose end fittings (31).

13. An offshore cryogenic offloading system according to any preceding claim wherein each transfer line (3a, 3b, 3c) is provided with a buoyancy element (11) at least near the end to be lifted and connected.

14. An offshore cryogenic offloading system according to any one preceding claim wherein the floating structure (1) and the floating tanker (2) are in an asymmetric tandem offloading configuration.

15. A method of transferring LNG in a bow to stem configuration between two floating structure (1) and a floating tanker (2) in a offshore cryogenic offloading system as claimed in any one of the preceding claims.

16. A method of transferring LNG according to claim 15 wherein each transfer line (3a, 3b, 3c) is installed independently one from the other.

## Patentansprüche

1. System zum kryogenen Entladen auf offener See, das in einem Meer mit einer Meeresoberfläche und einem Meeresboden liegt, wobei eine Kryoflüssigkeit zwischen zwei schwimmenden Einheiten in einer Bug-Heck-Anordnung umgeladen wird, wobei das System aufweist:
- eine schwimmende Struktur (1), die an der Meeresoberfläche liegt und Verarbeitungseinheiten aufweist,
- einen schwimmenden Tanker (2), der an der Meeresoberfläche liegt und die Kryoflüssigkeiten von einem Ort zu einem anderen transportiert,
wobei der Tanker eine Bugbeladungsstation aufweist;
- mindestens eine kryogene Umladeleitung (3b, 3c), die sich vom Heck der schwimmenden Struktur (1) zum Bug des schwimmenden Tankers (2) erstreckt, um Kryoflüssigkeiten zwischen den beiden zu befördern;
- mindestens eine als Dampfrückleitung (3a) dienende Umladeleitung, die sich vom Heck der schwimmenden Struktur (1) zum Bug des schwimmenden Tankers (2) erstreckt, um im Normalbetrieb den Abdampf von dem schwimmenden Tanker (2) zu der schwimmenden Struktur (1) zu befördern; wobei der Bug des schwimmenden Tankers (2) mit einer zusätzlichen Ebene ausgestattet ist, die ein auf einem Bugoberdeck (17) positioniertes Flüssigkeitsverbindungsdeck (16) aufweist,
**dadurch gekennzeichnet, dass**
der Bug des schwimmenden Tankers (2) mit einer dritten Ebene ausgestattet ist, die ein auf dem Flüssigkeitsverbindungsdeck (16) positioniertes Tandemvertäuungs-Entladedeck (19) aufweist, um zu ermöglichen, dass die beiden schwimmenden Einheiten (1, 2) lösbar miteinander vertäut werden, wobei
sämtliche Vertäuungs- und Bedienungselemente sich an der Bugbeladungsstation auf dem Tandemvertäuungs-Entladedeck (19) auf einer anderen Ebene als Flüssigkeitsverbindungselemente befinden, die sich auf dem Flüssigkeitsverbindungsdeck (16) befinden.

2. System zum kryogenen Entladen auf offener See nach Anspruch 1, wobei mindestens der schwimmende Tanker (2) mit einem dynamischen Positionierungssystem ausgestattet ist.

3. System zum kryogenen Entladen auf offener See nach einem beliebigen der vorhergehenden Ansprüche, wobei der Tanker (2) mit einem verlagerbaren Wulst (20) ausgestattet ist.

4. System zum kryogenen Entladen auf offener See nach Anspruch 1 oder 2, wobei die schwimmende Struktur (1) mit einem Steuerkursüberwachungssystem ausgestattet ist.

5. System zum kryogenen Entladen auf offener See nach einem beliebigen der vorhergehenden Ansprüche, wobei sich mindestens ein Festmacher zum Vertäuen der schwimmenden Struktur vom Meeresgrund erstreckt.

6. System zum kryogenen Entladen auf offener See nach einem beliebigen der vorhergehenden Ansprüche, wobei pro kryogener Umladeleitung (3a, 3b, 3c) ein kryogener Flüssigkeitsschlauchanschluss (21) an der Bugbeladungsstation (9) montiert ist.

7. System zum kryogenen Entladen auf offener See nach Anspruch 6, wobei jeder kryogene Flüssigkeitsschlauchanschluss (21) mit einer Nottrenneinrichtung ausgestattet ist.

8. System zum kryogenen Entladen auf offener See nach Anspruch 6 oder 7, wobei jeder kryogene Flüssigkeitsschlauchanschluss (21) mit einem Strukturverbinder (23) kombiniert ist, an dem eine Lastumleitungseinrichtung vorgesehen ist.

9. System zum kryogenen Entladen auf offener See nach Anspruch 1, wobei pro Umladeleitung (3a, 3b, 3c) eine Einziehwinde (28) an der Bugbeladungsstation (9) montiert ist.

10. System zum kryogenen Entladen auf offener See nach Anspruch 9, wobei die Einziehwinden (28) auch als Handhabungswinden verwendet werden.

11. System zum kryogenen Entladen auf offener See nach einem beliebigen der vorhergehenden Ansprüche, wobei die schwimmende Struktur (1) pro Umladeleitung (3) mit einer am Heck der schwimmenden Struktur (1) befindlichen Lagerungstrommel (6) ausgestattet ist.

12. System zum kryogenen Entladen auf offener See nach Anspruch 11, wobei die schwimmende Struktur (1) mit mindestens einer der Lagerungstrommeln (6) mit einem Querschnitt mit flachen Bereichen (32) zum Unterbringen der Anschlussstücke (31) des kryogenen Schlauchs ausgestattet ist.

13. System zum kryogenen Entladen auf offener See nach einem beliebigen der vorhergehenden Ansprüche, wobei jede Umladeleitung (3a, 3b, 3c) mit einem Auftriebselement (11) mindestens in der Nähe des anzuhebenden und zu verbindenden Endes ausgestattet ist.

14. System zum kryogenen Entladen auf offener See nach einem beliebigen der vorhergehenden Ansprüche, wobei sich die schwimmende Struktur (1) und der schwimmende Tanker (2) in einer asymmetrischen Tandementladeanordnung befinden.

15. Verfahren zum Umladen von Flüssigerdgas bei einer Bug-Heck-Anordnung zwischen zwei schwimmenden Strukturen (1) und einem schwimmenden Tanker (2) in einem System zum kryogenen Entladen auf offener See nach einem beliebigen der vorhergehenden Ansprüche.

16. Verfahren zum Umladen von Flüssigerdgas nach Anspruch 15, wobei jede Umladeleitung (3a, 3b, 3c) unabhängig voneinander montiert ist.

## Revendications

1. Système de déchargement cryogénique offshore qui repose dans une mer présentant une surface et un fond marin, dans lequel du fluide cryogénique est transféré entre deux unités flottantes dans une configuration allant de la proue vers la poupe, ledit système comprenant :
- une structure flottante (1) qui repose au niveau de la surface de la mer et comprend des unités de traitement,
- un navire-citerne flottant (2) qui repose au niveau de la surface de la mer et transporte les fluides cryogéniques d'un emplacement à un autre,
ledit navire-citerne ayant au moins une station de chargement avant ;
- au moins une conduite de transfert cryogénique (3b, 3c) qui s'étend depuis la poupe de ladite structure flottante (1) vers la proue dudit navire-citerne flottant (2) pour transporter des fluides cryogéniques de l'un à l'autre ;
- au moins une conduite de transfert servant de conduite de retour de vapeur (3a) qui s'étend depuis la poupe de ladite structure flottante (1) vers la proue dudit navire-citerne flottant (2) pour transporter la vapeur d'évaporation du navire-citerne flottant (2) vers la structure flottante (1) dans des opérations normales ;
dans lequel la proue du navire-citerne flottant (2) est pourvue d'un niveau supplémentaire comprenant un pont de raccordement fluidique (16) placé au sommet d'un pont supérieur avant (17),
**caractérisé en ce que**
la proue du navire-citerne flottant (2) est pourvue d'un troisième niveau comprenant un pont de déchargement à amarrage en tandem (19) placé au-dessus du pont de raccordement fluidique (16) pour permettre aux deux unités flottantes (1, 2) d'être amarrées de manière détachable l'une à l'autre,
dans lequel l'ensemble des éléments d'amarrage et de manoeuvre sont placés sur la station de chargement avant au niveau du pont de déchargement à amarrage en tandem (19) à un niveau différent de celui des éléments de raccordement fluidique qui sont au niveau du pont de raccordement fluidique (16).

2. Système de déchargement cryogénique offshore selon la revendication 1, dans lequel au moins le navire-citerne flottant (2) est pourvu d'un positionnement dynamique.

3. Système de déchargement cryogénique offshore selon l'une quelconque des revendications précédentes, dans lequel le navire-citerne (2) est pourvu d'un bulbe relocalisable (20).

4. Système de déchargement cryogénique offshore selon la revendication 1 ou 2, dans lequel la structure flottante (1) est pourvue d'un système de commande de cap.

5. Système de déchargement cryogénique offshore selon l'une quelconque des revendications précédentes, dans lequel au moins une conduite d'amarrage s'étend du fond marin pour amarrer la structure flottante.

6. Système de déchargement cryogénique offshore selon l'une quelconque des revendications précédentes, dans lequel il existe un raccord fluidique de tuyau cryogénique (21) par conduite de transfert cryogénique (3a, 3b, 3c) installée sur la station de chargement avant (9).

7. Système de déchargement cryogénique offshore selon la revendication 6, dans lequel chaque raccord fluidique de tuyau cryogénique (21) est pourvu de moyens de débranchement d'urgence.

8. Système de déchargement cryogénique offshore selon la revendication 6 ou 7, dans lequel chaque raccord fluidique de tuyau cryogénique (21) est combiné avec un raccord structurel (23) fournissant des moyens de dérivation de charge.

9. Système de déchargement cryogénique offshore selon la revendication 1, dans lequel il existe un treuil de traction (28) par conduite de transfert (3a, 3b, 3c) installé sur la station de chargement avant (9).

10. Système de déchargement cryogénique offshore selon la revendication 9, dans lequel les treuils de traction (28) sont également utilisés en tant que treuils de manoeuvre.

11. Système de déchargement cryogénique offshore selon l'une quelconque des revendications précédentes, dans lequel la structure flottante (1) est pourvue d'un touret de stockage (6) par conduite de transfert (3) placé au niveau de la poupe de la structure flottante (1).

12. Système de déchargement cryogénique offshore selon la revendication 11, dans lequel la structure flottante (1) est pourvue d'au moins un des tourets de stockage (6) ayant une section transversale présentant des sections plates (32) pour loger les embouts de tuyaux cryogéniques (31).

13. Système de déchargement cryogénique offshore selon l'une quelconque des revendications précédentes, dans lequel chaque conduite de transfert (3a, 3b, 3c) est pourvue d'un élément de flottabilité (11) au moins proche de l'extrémité devant être soulevée et branchée.

14. Système de déchargement cryogénique offshore selon l'une quelconque des revendications précédentes, dans lequel la structure flottante (1) et le navire-citerne flottant (2) sont dans une configuration de déchargement en tandem asymétrique.

15. Procédé de transfert de GNL dans une configuration de la proue à la poupe entre deux structures flottantes (1) et un navire-citerne flottant (2) dans un système de déchargement cryogénique offshore selon l'une quelconque des revendications précédentes.

16. Procédé de transfert de GNL selon la revendication 15, dans lequel chaque conduite de transfert (3a, 3b, 3c) est installée indépendamment des autres.
